# NEW EUROPEAN PATENT SPECIFICATION

(11) **EP 2 956 303 B2**
(45) Date of publication and mention of the opposition decision: **09.12.2020**
(45) Mention of the grant of the patent: 20.12.2017
(21) Application number: 14705725.1
(22) Date of filing: 06.02.2014
(51) Int. Cl.: B32B 37/15, B32B 37/12, B32B 7/12, B32B 27/10, B65D 75/26, B32B 15/08, B32B 27/32, B65D 5/06, B65D 85/72

(54) **PACKAGING LAMINATE, METHOD FOR PRODUCING SAME, AND PACKAGING CONTAINER PRODUCED FROM THE PACKAGING LAMINATE**
VERPACKUNGSLAMINAT, HERSTELLUNGSVERFAHREN DAFÜR UND AUS DEM VERPACKUNGSLAMINAT HERGESTELLTER VERPACKUNGSBEHÄLTER
STRATIFIÉ D'EMBALLAGE, SON PROCÉDÉ DE FABRICATION ET RÉCIPIENT D'EMBALLAGE PRODUIT À PARTIR DU RÉCIPIENT D'EMBALLAGE

(30) Priority: 18.02.2013 EP 13155645
(43) Date of publication of application: 23.12.2015
(73) Proprietor: Tetra Laval Holdings & Finance SA, 1009 Pully (CH)
(72) Inventor: JOHANSSON, Hans, 234 33 Lomma (SE)
(74) Representative: Beck Greener LLP
(86) International application number: PCT/EP2014/052287
(87) International publication number: WO 2014/124858

(56) References cited:
- EP-A2- 1 075 921
- WO-A1-2009/101158
- WO-A2-2011/003565

## Description

### Technical field

The present invention relates to a method for producing a packaging laminate comprising a paper or paperboard layer and a layer serving as gas barrier, which layers are bonded to each other by a lamination layer, in which method a web of a material with gas barrier properties is brought together with a web of paper or paperboard, and the webs brought together are guided through the nip between two rotatable cylinders, while at the same time a laminating material is applied between the webs in order to permanently bind these to each other.

The invention also relates to a packaging laminate comprising a paper or paperboard layer and a layer serving as gas barrier, which layers are bonded to each other by a lamination layer.

In addition, the invention relates to a packaging container for foods, which packaging container has been produced by folding the packaging laminate.

### Background of the invention

A known packaging laminate of the type described above generally has a layer of paper or paperboard and outer liquid-tight coatings of polyethylene (PE), preferably low-density polyethylene (LDPE). In order to give the packaging laminate barrier properties against gases, in particular oxygen, the packaging laminate additionally has at least one further layer of a material which provides such barrier properties and which is bonded to the paper or paperboard layer by a lamination layer, preferably low-density polyethylene (LDPE). Examples of materials for a further layer of this kind can be a layer or film containing a polymer with inherent barrier properties, for example a copolymer of ethylene and vinyl alcohol (EVOH) or a polyamide (PA), or a prefabricated film coated with a liquid-film-coated or vacuum-deposited or vapour-deposited layer having corresponding barrier properties mainly against gases but also against flavouring agents and water vapour. A common example of coated prefabricated films of this kind is that of oriented films of polyester, for example polyethylene terephthalate (PET) or polypropylene (PP), with a metallized layer or a layer coated by plasma-assisted vapour deposition. An aluminium foil is generally used which, in addition to having excellent barrier properties against gases, in particular oxygen, also has the advantageous property of allowing the packaging laminate to be heat-sealed by induction sealing, which is a rapid, simple and effective heat-sealing technique.

The known packaging laminate is conventionally produced from a web of paper or paperboard which is unwound from a storage reel, while at the same time a web of aluminium is unwound from a corresponding storage reel. The two unwound webs are brought together with each other and are both guided through the nip between two adjacent rotatable cylinders, while at the same time a laminating material, usually low-density polyethylene (LDPE), is applied between the webs in order to permanently bind the aluminium web to the paper or paperboard web. The paper or paperboard web is thereafter provided on both sides with liquid-tight coatings of polyethylene, normally low-density polyethylene (LDPE), and is then wound up on finished packaging reels for onward transport and handling.

Dimensionally stable packaging containers of the single-use type are produced from the packaging laminate with the aid of highly efficient packaging machines of the type that shape, fill and seal finished packages from a web or from prefabricated blanks of the packaging laminate.

For example, from a web of the packaging laminate, packaging containers are produced by a process in which the web is firstly shaped into a tube by means of both lengthwise edges of the web being joined permanently to each other in an overlap seam by melting together the mutually facing plastic layers of the web. The tube is filled with the food product in question, e.g. milk or juice, and is divided into contiguous pillow-shaped packaging units by repeated pressing-together and heat-sealing of the tube transversely with respect to the longitudinal direction of the tube, below the product level of the tube. The pillow-shaped packaging units are separated from each other, by cuts made in the transverse sealing zones, and are finally given the desired geometric shape, usually a shape like a brick, by means of at least one further forming and heat-sealing operation.

A packaging laminate of the known type, such as that of WO 2009/101158 A1, permits the production of dimensionally stable packaging containers that are product-compatible and consumer-friendly and hold oxygen-sensitive liquid food, for example milk, juice, wine and cooking oil, but are nonetheless associated with disadvantages in terms of both the environment and also processing technology.

For example, the low-density polyethylene (LDPE) used to bind the aluminium foil to the paper or paperboard layer is a non-polar polymer which in itself lacks natural binding sites for binding to corresponding binding sites on the surface of the aluminium foil. Therefore, in the known method, functional binding sites have to be created synthetically. In practice, this is done by a process in which low-density polyethylene (LDPE) is applied between the paper or paperboard web and the aluminium web by extrusion at a higher temperature (in this case at ca 330°C) than the temperature (ca 300°C) that is normally used for extrusion coating of low-density polyethylene, while at the same time ozone is added in order to initiate an oxidation reaction and form polar groups, including free carboxylic acid groups, via which the low-density polyethylene (LDPE) can bind to active binding sites on the surface of the aluminium foil. An extrusion at elevated temperature (ca 330°C) entails increased consumption of energy and, consequently, an increased emission of environmentally harmful greenhouse gases ("carbon footprint").

An extrusion of low-density polyethylene (LDPE) at elevated temperature (ca 330°C), as in the known method, causes degradation reactions of the polyethylene molecule by chain-scission and cross-linking reactions. Once they have actually started, these degradation reactions can proceed to such an extent that the desired ability of the polymer to maintain a permanent binding strength between the aluminium foil and the paper or paperboard layer is lost, and the mechanical strength is thereby also lost.

Ozone, which is generally used as an agent for promoting oxidation and adherence, is itself a gas that is harmful to health and to the environment, and it has to be handled with the utmost care in order to prevent the gas leaking out.

There is therefore a need to make available a packaging laminate of the type mentioned at the outset, without the problems and disadvantages of the type associated with the known technique described above.

It is therefore an object of the invention to meet this need.

Another object is to make available a method which is of the type described at the outset but which, in contrast to the known method, can be carried out without unnecessarily excessive consumption of energy, and without the use of substances that are harmful to health and to the environment, in order to achieve and maintain a permanent functional binding between the gas barrier layer and the paper or paperboard layer of the packaging laminate.

A further object is to make available a packaging laminate for a packaging container for oxygen-sensitive liquid food, of the type produced by folding and heat-sealing of the packaging laminate.

Yet another object is to make available a packaging container which is used for oxygen-sensitive liquid food and which is produced by folding and heat-sealing of the packaging laminate.

### Description of the invention

In one aspect, the invention thus makes available a method for producing a packaging laminate comprising a paper or paperboard layer serving as gas barrier, the latter being bonded to the paper or paperboard layer by a lamination layer, in which method a web of a material with barrier properties against gases, in particular oxygen, is brought together with a web of paper or paperboard, and the webs brought together are guided through a nip between two adjacent rotatable cylinders, while at the same time a laminating material is applied between the webs in order to permanently bind these to each other. The method is characterized in that the laminating material comprises a central polymer layer comprising a polyolefin which, on one surface, has a first outer layer of a first adhesive polymer with the ability to bind to the paper or paperboard web and, on its other surface, has a second outer layer of a second adhesive polymer with the ability to bind to the material web serving as gas barrier, and in that the laminating material is applied with its first adhesive polymer layer in contact with the paper or paperboard web, and with its second adhesive polymer layer in contact with the material web serving as gas barrier.

By virtue of the fact that, in the method according to the invention, the laminating material serving as lamination layer comprises outer layers of adhesive polymers which from the very outset have active binding sites to their respective adjacent webs, there is no need for any extra measures or additives in order to achieve the desired binding between these layers. The method according to the invention can thus be carried out without an elevated temperature and excessive consumption of energy upon application of the laminating material, and without the use of methods or substances that are harmful to health and to the environment, such as ozone treatment.

The laminating material serving as lamination layer is applied by an extrusion process using commercially available extrusion equipment, with the aid of which the layers included in the lamination layer are extruded together with each other by co-extrusion. The method according to the invention also makes it possible to improve the mechanical properties of the packaging laminate, by using laminating material in the central layer with higher mechanical strength from various aspects, and to optimize them in respect of the layer thicknesses of the materials included in the laminating material. Thin layers of polymers, for example 2-6 g/m², for example 2-5 g/m², for example 3 to 4 g/m², can only be achieved in a robust coating method in which molten layers are extruded together and not as individually extruded layers.

Whereas the choice of laminating material in the known method was limited to low-density polyethylene (LDPE) for reasons of economy and processing technology, the method according to the invention affords increased flexibility and freedom in the choice of suitable laminating material. For example, the central polymer layer in the laminating material can be chosen regardless of its own ability to bind to the surrounding materials of paper or paperboard and the gas barrier, and, if so desired, it can be chosen according to other parameters, such as the desired mechanical properties, of the finished packaging laminate.

According to the invention, the central polymer layer in the laminating material comprises a polyolefin. According to one embodiment of the invention, the central polymer layer in the laminating material comprises a polyethylene. Within the group of polyethylenes, the properties of the central layer can be varied and tailored in order to achieve various final properties in a packaging laminate. Depending on what is required of the finished packaging laminate as regards various mechanical properties, for example tear resistance, puncture resistance and durability, it is possible, according to the invention, for the laminating material and the adhesive polymer to be combined and varied within the context of suitable processing properties in extrusion coating and extrusion lamination. Variations of the laminating material for the desired type of packaging laminate for beverages and liquids are thus found largely within the group of polyethylene polymers. This group thus also includes copolymers of ethylene and other alpha-olefin monomers which of course include, for example, linear low-density polyethylenes (LLDPE), very low-density polyethylenes (VLDPE), ultra low-density polyethylenes (ULDPE), also copolymers of ethylene and propylene in different proportions, for example so-called plastomers or elastomers of the type marketed by Dow under the names "Engage" and "Affinity" and also terpolymers of ethylene, propylene and an alpha-olefin monomer having polyethylene-like properties.

Examples of polymers that can help to improve various mechanical properties are what are called linear polymers, such as linear polyolefins, for example high-density polyethylene (HDPE), medium-density polyethylene (MDPE), linear low-density polyethylene (LLDPE), very low-density polyethylenes (VLDPE), ultra low-density polyethylenes (ULDPE) produced with conventional catalysts or with so-called single-site catalysts, or constrained-geometry catalysts, including so-called metallocene-LLDPE (m-LLDPE), polypropylene (PP) homocopolymer, and linear polypropylene copolymers with ethylene.. Very low density polyethylene (VLDPE) and ultra low density polyethylene (ULDPE) are examples of subcategories within the category of linear low density polyethylenes. Linear polymers are understood as polymers which have a more linear molecular structure than LDPE, i.e. which have fewer long-chain branches. Depending on the type and quantity of comonomer, these polymers generally have greater durability in several respects. Depending on what is required of the finished packaging laminate as regards various mechanical properties, for example tear resistance, puncture resistance and durability, it is possible, according to the invention, for the laminating material and the adhesive polymer to be combined and varied within the context of suitable processing properties in extrusion coating and extrusion lamination. Variations of the laminating material for the desired type of packaging laminate for beverages and liquids are found within the group of polyethylene polymers, for example polymers chosen from the group that includes low-density polyethylene (LDPE), high-density polyethylene (HDPE), medium-density polyethylene (MDPE), linear low-density polyethylene (LLDPE), very low-density polyethylenes (VLDPE), ultra low-density polyethylenes (ULDPE) produced with conventional catalysts or with so-called single-site catalysts, or constrained-geometry catalysts, including so-called metallocene-LLDPE (m-LLDPE), and mixtures of two or more of these polymers.

According to one embodiment of the invention, the polymer in the laminating material in the method according to the invention is a low-density polyethylene (LDPE) which can be produced either by a polymerization reaction in an autoclave reactor or by a polymerization reaction in a tube reactor. According to one embodiment of the invention, the laminating material may be a blend of LDPE produced by a polymerization reaction in an autoclave reactor and LDPE produced by a polymerization reaction in a tube reactor. In some cases, a low-density polyethylene which is produced by a polymerization reaction in an autoclave reactor is preferred for production of a packaging material for subsequent production of a packaging container. In some cases, a low-density polyethylene which is produced by a polymerization reaction in a tube reactor is preferred for production of a packaging material for subsequent production of a packaging container. A low-density polyethylene (LDPE) produced by polymerization in an autoclave reactor can be extruded in a conventional manner without serious edge effects in the form of what is called neck-in, but it has poorer draw-down properties, i.e. compared to the other abovementioned polyethylene materials it has a higher melt elasticity under the same processing conditions. It typically has a broad molecular weight distribution and many long-chain branches in its molecular structure.

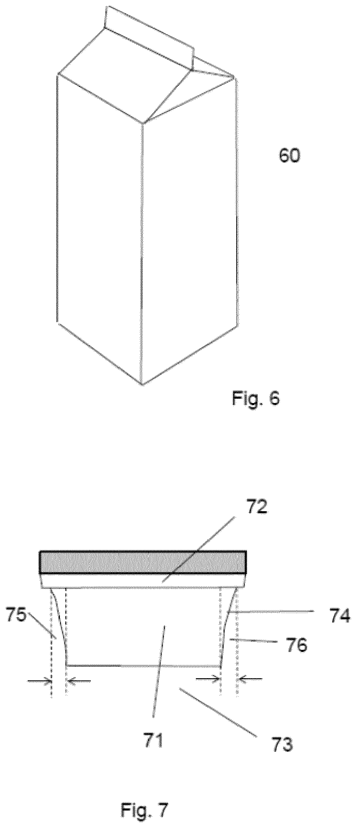

Neck-in is understood as the drawing-in at the edges of a melt curtain of extruded polymer, which occurs between the outlet of the extrusion die and the first point of contact of the curtain with the running web of material that is to be coated with the polymer. The warm extruded molten film thus shrinks, such that its width shrinks on the way between the die and the nip between the cooling cylinders. At the same time, the edge zones of the melt curtain thicken. In order to overcome this problem, the warm curtain is often extruded wider than the web that is to be coated, in order to reduce costs in respect of uncoated substrate material, which is often more expensive than the extruded polymer. The edge waste that is formed thus consists of only extruded material, which can be cut away and recycled. The phenomenon is shown schematically in Figure 7, which shows a melt curtain 71 which, at the outlet 72 of the die, has the same width as the web 73 to be coated, but which then shrinks 74 such that the edge zones 75, 76 of the web remain uncoated. The width of the edge zones constitutes the measure of the neck-in in millimetres and is usually indicated as the combined uncoated width of both the edges. The term draw-down refers to the ability of the extruded melt curtain to hold together, cohere, without breaks or gaps in the curtain as the melt is drawn with high acceleration down the web in the nip from the outlet of the extrusion die. These properties of a polymer melt depend on its balance between viscous and elastic properties and can be summarized by the term "melt elasticity". This balance is a result of a number of polymer characteristics, mainly the molecuar weight distribution and long-chain branching.

According to one embodiment of the invention, LDPE produced in an autoclave reactor with an MFI of 4 to 10 g/10 min, measured as per ISO1133 at 2.16 kg and 190°C, can be advantageously combined with adhesive layers of adhesive polymer with an MFI value of 4 to 10 g/10 min. According to one embodiment of the invention, LDPE produced in an autoclave reactor with an MFI of 4 to 10 g/10 min, measured as per ISO1133 at 2.16 kg and 190°C, can advantageously be combined with adhesive layers of adhesive polymer with an MFI value of 10 to 20 g/10 min. According to one embodiment, LDPE produced in an autoclave reactor with an MFI of 10 to 20 g/10 min, measured as per ISO1133 at 2.16 kg and 190°C, can advantageously be combined with adhesive layers of adhesive polymer with an MFI value of 4 to 10 g/10 min.

On the other hand, a low-density polyethylene (LDPE) produced by polymerization in a tube reactor is much more sensitive to negative edge effects, in the form of neck-in during conventional extrusion, than is a low-density polyethylene (LDPE) produced by polymerization in an autoclave reactor, and it therefore cannot be extruded without an appreciable neck-in effect, which results in material waste from the edges of the web and, consequently, increased costs. A tube-produced LDPE also has long-chain branches, but it lacks the high proportion of molecules of high molecular weight which an autoclave-produced LDPE has and which can be seen as a "tail" or "extra top" at the end of a molecular weight distribution curve for autoclave-produced LDPE. A tube-produced LDPE generally has a lower melt elasticity than an autoclave-produced LDPE.

With the method according to the invention, an LDPE produced in a tube reactor can, despite this, be applied at relatively high extrusion speeds, in part by virtue of its better draw-down properties, even at lower temperatures. At the same time, the layer in the laminating material with LDPE produced in a tube reactor can be extruded more thinly, and the total amount of laminating material is reduced, better adhesion can be achieved, and energy is saved. By virtue of the method according to the invention, an LDPE produced by polymerization in an autoclave reactor can also be extruded at relatively high speed and also at lower temperature, despite its poorer draw-down properties compared to an LDPE produced in a tube reactor, while at the same time the layers can be extruded more thinly, and the total amount of laminating material is reduced, better adhesion can be achieved, and energy is saved.

By means of the method according to the invention, differences in the behaviour of the two polymer types upon extrusion can be effectively counteracted and even eliminated by a suitable choice of the outer adhesive layers of the laminating material. An adhesive polymer material should be of a type which is intended for extrusion coating or extrusion lamination. At a lower extrusion temperature, and in the method according to the invention, it is therefore possible, despite everything, to maintain the necessary adhesion and avoid negative edge effects, while at the same time the extrusion process is more energy-efficient and avoids the use of substances and methods that are harmful to health and to the environment. Sufficient adhesion means an adhesion of at least 100 N/m measured using the conventional peel test (see description in the attached examples). By co-extruding the central layer of the laminating material with the outer adhesive layers on both sides, a more stable melt curtain of polymer is obtained, i.e. a melt curtain with fewer problems with undulating edges, rapid edge cast or draw resonance, and the properties of the different laminating materials in respect of neck-in and draw-down can be compensated for synergistically by each other even at lower extrusion temperatures, such that lamination of material can take place at relatively high speed, while at the same time sufficient or improved adhesion is achieved, and thin layers of the respective polymers can be applied without defects, such that the total costs for raw material and laminating steps in the production are maintained or even reduced. Lower extrusion temperatures mean temperatures that are more than 15 degrees lower than the temperature used in conventional extrusion lamination with only LDPE as laminating material, i.e. 325-330°C, for example 280-310°C, for example 290-310°C. The extrusion temperature is measured by an IR meter on the melt curtain immediately below the outlet of the die. Relatively high extrusion or lamination speed means web speeds from ca 400 m/min and upwards, while a lower speed means ca 100-300 m/min. Thin layers mean layers thinner than the thickness of 20 g/m² or thinner, which is normally required in conventional extrusion lamination with only LDPE as laminating material. The central layer of the laminating material according to the invention can have a thickness of from 10 to 14 g/m², while the outer adhesive polymer layers of the laminating material can each have a thickness of from 2 to 5 g/m², for example 3 to 4 g/m².

The method according to the invention is especially advantageous for LDPE polymers that have been produced by polymerization in a tube reactor, in order to overcome the disadvantages thereof in the form of low melt elasticity and the associated neck-in tendency, while at the same time other general advantages are obtained, namely excellent adhesion, lower energy consumption, and advantages in terms of health and the environment.

The method according to the invention is in the same way advantageous for linear polymers, especially polyolefins with a more or less linear molecular structure, generally linear polyethylene polymers, since they have more or less the same processing properties, during extrusion coating, as LDPE that has been produced by polymerization in a tube reactor, and their common feature is that they have low melt elasticity and therefore a high tendency to neck-in at the edges of the melt curtain as compared to conventional autoclave-produced LDPE.

According to one embodiment of the invention, the laminating material thus comprises polyethylene chosen from the group consisting of LDPE produced by polymerization in a tube reactor, high-density polyethylene (HDPE), medium-density polyethylene (MDPE), linear low-density polyethylene (LLDPE), very low-density polyethylenes (VLDPE), ultra low-density polyethylenes (ULDPE) produced with conventional catalysts, or other catalysts, or with so-called single-site catalysts or constrained-geometry catalysts, including so-called metallocene-LLDPE (m-LLDPE) catalysts, and mixtures of two or more of these polymers. A common feature of all these polymer types is that they have low melt elasticity with a corresponding MFI, in extrusion coating, as compared to autoclave-produced LDPE, the reason being that they have a narrower molecular weight distribution and/or a lower proportion of long-chain branches.

According to one embodiment of the invention, the laminating material comprises polyethylene chosen from the group consisting of LDPE produced by polymerization in a tube reactor, medium-density polyethylene (MDPE), linear low-density polyethylene (LLDPE), very low-density polyethylenes (VLDPE), ultra low-density polyethylenes (ULDPE) produced with conventional catalysts, or other catalysts, or with so-called single-site catalysts or constrained-geometry catalysts, including so-called metallocene-LLDPE (m-LLDPE) catalysts, and mixtures of two or more of these polymers. A common feature of all these polymer types is that they have low melt elasticity with a corresponding MFI, in extrusion coating, as compared to autoclave-produced LDPE, the reason being that they have a narrower molecular weight distribution and/or a lower proportion of long-chain branches.

The linear polymers also provide a laminated packaging material according to the invention with better mechanical properties, such as improved tear resistance and puncture resistance, and this results in packaging containers with improved integrity, i.e. improved durability to transport stresses.

According to one embodiment of the invention, the laminating material thus comprises polyethylene chosen from the group consisting of medium-density polyethylene (MDPE), linear low-density polyethylene (LLDPE), very low-density polyethylenes (VLDPE), ultra low-density polyethylenes (ULDPE) produced with conventional catalysts, other catalysts, or with so-called single-site catalysts or constrained-geometry catalysts, including so-called metallocene-LLDPE (m-LLDPE) catalysts, and mixtures of two or more of these polymers.

As has been mentioned above, a well-functioning adhesive polymer for use in the laminating material in the method according to the invention must from the very outset, and therefore without the need for additional measures, have active binding sites in the form of polar functional groups, according to one embodiment of the invention carboxylic acid groups, by which the laminating material can effectively and permanently bind on the one hand to the paper or paperboard web and on the other hand to the web of material serving as gas barrier. The content of polar binding groups must be high enough to achieve adhesion with the aluminium foil and the paperboard layer, but not so high that the adhesive material loses compatibility with the central layer of the laminating material. According to one embodiment of the invention, the proportion of polar binding groups, especially carboxylic acid groups, is from 1 to 10 % by weight. A further requirement of a well-functioning adhesive polymer is that it can be extruded at a temperature which is high enough to achieve adhesion, but without initiating uncontrolled degradation reactions that impair quality. For Primacor 3540, used in the Examples, the temperature should rather not exceed 290 °C and at any rate not 300 °C.

Examples of adhesives that meet the above requirements are an ethylene-acrylic acid copolymer (EAA) and an ethylene-methacrylic acid copolymer (EMAA), which both include free carboxylic acid groups by which these polymers can bind to the respective web on both sides of the laminating material. A practical example of the first-mentioned type (EAA) is commercially available under the trade name Primacor from Dow Chemical Company, and a corresponding example of the latter type (EMAA) can be obtained from DuPont under the trade name Nucrel. A further example of a usable adhesive is the one sold by ExxonMobil Chemicals under the trade name Escor. According to the invention, it is advantageous, for reasons of processing technology, to use the same adhesive in the adhesive layer on one surface of the polymer layer as in the adhesive layer on the other surface of the polymer layer, although the amounts of adhesive in the respective adhesive layers can differ from each other. However, it is possible to use different adhesives in the two layers, if so desired, in order to achieve particular properties. According to one embodiment of the invention, the adhesive polymer has an equivalent viscosity to, and therefore a melt flow index (MFI) at the same level as, an LDPE which is used in the central layer of the laminating material, intended for extrusion coating. According to one embodiment of the invention, the adhesive polymer has a lower viscosity than, and therefore a higher melt flow index (MFI) than, an LDPE which is used in the central layer of the laminating material, intended for extrusion coating.

An adhesive layer containing functional polar groups in the form of carboxylic acid groups, may be characterised by methods including for example infrared spectroscopy (IR, FTIR). A particular adhesive polymer having a particular monomeric composition, will give rise to a characteristic absorption spectra with peaks representing different molecular groups of the monomers included. In particular carboxylic groups will give rise to a characteristic peak in the FTIR spectrum that corresponds to stretching vibration of the carboxylic acid group at between 1710-1780 cm-1.

Materials that have gas barrier properties and that are usable in the method according to the invention may be both organic and also inorganic materials. An example of organic materials providing a gas barrier is that of copolymers of ethylene and vinyl alcohol (EVOH) and various types of polyamides (PA). Organic barrier materials can be extrusion-coated polymer layers, but they can also be prefabricated polymer films. In the present case, a prefabricated film can be provided with barrier layers of vapour-deposited organic or inorganic compounds or liquid-film-coated layers of polymers with different barrier properties. Examples of inorganic barrier materials can be an aluminium foil or a coating of metal, metal oxide or other vapour-deposited compound on a prefabricated polymer film, e.g. vapour-deposited aluminium or aluminium oxide or silicon oxide (SiOx). According to one embodiment of the invention, the barrier layer is made of an aluminium foil which, in addition to having excellent barrier properties against gases, also allows the packaging laminate to be sealed by induction sealing, which is a rapid, simple and effective heat-sealing technique. Alternatively, sealing can be carried out using an ultrasonic sealing technique, which is also a rapid, simple and effective heat-sealing technique.

In the method according to the invention, at least one of the two liquid-tight and heat-sealable outer layers of polymer can be applied by film lamination, in which a prefabricated film of the polymer is laminated onto one surface of the web with the aid of a suitable adhesive that is applied between the web and the film. In one method according to the invention, the two liquid-tight and heat-sealable outer layers are applied by extrusion coating to both sides of the web with the aid of conventional and already installed extrusion equipment.

Examples of usable polymers for the liquid-tight and heat-sealable outer layers of the packaging laminate according to the invention are polyolefins, such as low-density polyethylene (LDPE), linear low-density polyethylene (LLDPE), very low-density polyethylenes (VLDPE), ultra low-density polyethylenes (ULDPE), high-density polyethylene (HDPE) and polypropylene (PP) homo- or copolymers.

In a second aspect, the invention makes available a packaging laminate for a packaging container for oxygen-sensitive liquid food, such as milk, juice, wine and cooking oil, which packaging laminate comprises a layer of paper or paperboard, and a layer which serves as gas barrier and is bonded to the paper or paperboard layer by a laminating material. The packaging laminate is characterized in that the laminating material comprises a central polymer layer comprising a polyolefin which, on one surface, has a first layer of a first adhesive polymer with the ability to bind to the paper or paperboard layer and, on its other surface, has a second layer of a second adhesive polymer with the ability to bind to the layer serving as gas barrier, in that the first adhesive layer on one surface of the polymer layer is in contact with the paper or paperboard layer, and in that the second adhesive layer on the other surface of the polymer layer is in contact with the layer serving as gas barrier.

Examples of polymers that can help to improve the mechanical properties of the finished packaging laminate, when they are included in a laminating layer, are so-called linear polymers, for example linear polyolefins, for example high-density polyethylene (HDPE), medium-density polyethylene (MDPE), linear low-density polyethylene (LLDPE), very low-density polyethylenes (VLDPE), ultra low-density polyethylenes (ULDPE) produced with conventional catalysts or with so-called single-site catalysts or constrained-geometry catalysts, including so-called metallocene-LLDPE (m-LLDPE) catalysts, polypropylene (PP) homocopolymer, and linear polypropylene copolymers with ethylene. Depending on what is required of the finished packaging laminate as regards various mechanical properties, for example tear resistance, puncture resistance and durability, it is possible, according to the invention, for the laminating material and the adhesive polymer to be combined and varied within the context of suitable processing properties in extrusion coating and extrusion lamination. Mechanical, elastic properties of this kind are achieved with polyethylenes of the types MDPE, LLDPE), very low-density polyethylenes (VLDPE), ultra low-density polyethylenes (ULDPE) and m-LLDPE, while HDPE generally gives, for example, improved barrier properties in respect of water vapour, and somewhat improved barrier properties also against oxygen.

Variations of the laminating material for the desired type of packaging laminate for beverages and liquids are thus found within the group of polyethylenes, i.e. polymers chosen from the group that includes low-density polyethylene (LDPE), high-density polyethylene (HDPE), medium-density polyethylene (MDPE), linear low-density polyethylene (LLDPE), very low-density polyethylenes (VLDPE), ultra low-density polyethylenes (ULDPE) produced with conventional catalysts or with so-called single-site catalysts or constrained-geometry catalysts, including so-called metallocene-LLDPE (m-LLDPE) catalysts, and mixtures of two or more of these polymers. According to one embodiment of the invention, the polymer in the laminating material in the packaging laminate according to the invention is a low-density polyethylene (LDPE) which can be produced either by a polymerization reaction in an autoclave reactor or by a polymerization reaction in a tube reactor. A low-density polyethylene (LDPE) which is produced by polymerization in an autoclave can be extruded in a conventional manner without serious edge effects in the form of what is called neck-in, but it has limited draw-down properties, compared to LDPE produced in a tube reactor, i.e. compared to the other abovementioned polyethylene materials it has a higher melt elasticity, with corresponding MFI value, under the same processing conditions.

A low-density polyethylene (LDPE) produced by polymerization in a tube reactor generally has a lower melt elasticity and is nevertheless much more sensitive to negative edge effects, in the form of neck-in during conventional extrusion, than is a low-density polyethylene (LDPE) produced by polymerization in an autoclave reactor, and it therefore cannot be extruded without appreciable neck-in, which results in substantial edge waste from the web and, consequently, increased costs. With the method according to the invention, an LDPE produced in a tube reactor can, despite this, be applied at relatively high extrusion speeds, for example 400 m/min and higher, in part by virtue of its better draw-down properties, even at lower temperatures, for example from 280 to 310, for example from 290 to 300°C. At the same time, the layer in the laminating material with LDPE produced in a tube reactor can be extruded more thinly, in the method according to the invention, than in the case of conventional lamination with only LDPE as laminating material, and the total amount of laminating material can be reduced, sufficient or better adhesion can be achieved, and energy is saved. By virtue of the method according to the invention, an LDPE produced by polymerization in an autoclave reactor can also be extruded at relatively high speed and also at lower temperature, despite its poorer draw-down properties, while at the same time the layers can be extruded more thinly, and the total amount of laminating material is reduced, better adhesion can be achieved, and energy is saved.

By means of the method according to the invention, differences in the behaviour of the two polymer types upon extrusion can be effectively counteracted and even eliminated by a suitable choice of the outer adhesive layers of the laminating material. An adhesive polymer material should be of a type which is intended for extrusion coating or extrusion lamination. At a lower extrusion temperature, in the method according to the invention, it is therefore possible to maintain the necessary adhesion and avoid negative edge effects, while at the same time the extrusion process is more energy-efficient and avoids the use of substances and methods that are harmful to health and to the environment. By co-extruding the central layer of the laminating material with the outer adhesive layers on both sides, a more stable melt curtain of polymer is obtained, and the various properties of the laminating materials in respect of neck-in and draw-down can compensate each other at lower extrusion temperatures, and lamination of material can take place at relatively high speed, while at the same time good or better adhesion can be achieved, and thin layers of the respective polymer layers can be applied without defects, such that the total costs for raw material and laminating steps in the production are maintained or even reduced. The method according to the invention is especially advantageous for LDPE polymers that have been produced by polymerization in a tube reactor, in order to overcome the disadvantages thereof in the form of neck-in tendency, while at the same time other general advantages are obtained in the production of the packaging laminate, namely excellent adhesion, lower energy consumption, and advantages in terms of health and the environment.

The packaging laminate according to the invention is in the same way advantageous for comprising linear polymers as laminating material, especially polyolefins with a linear molecular structure, compared to LDPE that has been produced by polymerization in a tube reactor, generally polyethylene polymers, since they have more or less the same processing properties in extrusion coating and their common feature is that they all have low melt elasticity and therefore a high tendency to neck-in at the edges of the melt curtain as compared to conventional autoclave-produced LDPE.

According to one embodiment of the invention, the laminating material thus comprises polyethylenes chosen from the group consisting of LDPE produced by polymerization in a tube reactor, high-density polyethylene (HDPE), medium-density polyethylene (MDPE), linear low-density polyethylene (LLDPE), very low-density polyethylenes (VLDPE), ultra low-density polyethylenes (ULDPE) produced with conventional catalysts, or other catalysts, or with so-called single-site catalysts or constrained-geometry catalysts, including so-called metallocene-LLDPE (m-LLDPE) catalysts, and mixtures of two or more of these polymers. A common feature of all these polymer types is that they have a lower melt elasticity with a corresponding MFI, in extrusion coating, as compared to autoclave-produced LDPE, the reason being that they have a narrower molecular weight distribution and/or a lower proportion of long-chain branches.

According to one embodiment of the invention, the laminating material comprises polyethylenes chosen from the group consisting of LDPE produced by polymerization in a tube reactor, medium-density polyethylene (MDPE), linear low-density polyethylene (LLDPE), very low-density polyethylenes (VLDPE), ultra low-density polyethylenes (ULDPE) produced with conventional catalysts, or other catalysts, or with so-called single-site catalysts or constrained-geometry catalysts, including so-called metallocene-LLDPE (m-LLDPE) catalysts, and mixtures of two or more of these polymers. A common feature of all these polymer types is that they have a lower melt elasticity with a corresponding MFI, in extrusion coating, as compared to autoclave-produced LDPE, the reason being that they have a narrower molecular weight distribution and/or a lower proportion of long-chain branches. The linear polymers also provide a laminated packaging material according to the invention with better elastic properties, such as improved tear resistance and puncture resistance, and this results in packaging containers with improved integrity, i.e. improved durability to transport stresses.

According to one embodiment of the invention, the laminating material thus comprises polyethylenes chosen from the group consisting of medium-density polyethylene (MDPE), linear low-density polyethylene (LLDPE), very low-density polyethylenes (VLDPE), ultra low-density polyethylenes (ULDPE) produced with conventional catalysts, other catalysts, or with so-called single-site catalysts or constrained-geometry catalysts, including so-called metallocene-LLDPE (m-LLDPE) catalysts, and mixtures of two or more of these polymers.

Examples of usable polymers for the liquid-tight outer layers of the packaging laminate according to the invention are polyolefins, such as low-density polyethylene (LDPE), linear low-density polyethylene (LLDPE), very low-density polyethylenes (VLDPE), ultra low-density polyethylenes (ULDPE), high-density polyethylene (HDPE) and polypropylene (PP) homo- or copolymers.
In cases where the barrier layer is made of aluminium foil, the outer layer on the inside of the packaging laminate, i.e. the side to be directed towards a product packed in the packaging container, is advantageously bonded to the aluminium foil by a layer of an adhesive polymer, which can be the same as or different than the ones used in the laminating layer 13. This results in even better adhesion between all the layers of the packaging laminate and in good durability of the filled packaging containers, for example during transport and handling.

As has been mentioned above, a usable adhesive for the packaging laminate according to the invention must from the very outset have active binding sites in the form of polar functional groups, according to one embodiment of the invention free carboxylic acid groups, by which the laminating material can effectively and permanently bind on the one hand to the paper or paperboard web and on the other hand to the material serving as gas barrier.

As has already been mentioned, examples of a usable adhesive for the packaging laminate according to the invention can be an ethylene-acrylic acid copolymer (EAA) and an ethylene-methacrylic acid copolymer (EMAA), which both include free carboxylic acid groups by which they can bind effectively and permanently to the respective adjacent layer in the packaging laminate. A practical example of the first-mentioned type (EAA) is commercially available under the trade name Primacor from Dow Chemical Company, and a corresponding example of the latter type (EMAA) can be obtained from DuPont under the trade name Nucrel. A further example of a usable adhesive is the one sold by ExxonMobil Chemicals under the trade name Escor. According to the invention, it is preferable, for reasons of processing technology, to use the same adhesive in the adhesive layer on one surface of the polymer layer as in the adhesive layer on the other surface of the polymer layer, although the amounts of adhesive in the respective adhesive layers can differ from each other. However, it is possible to use different adhesives in the two layers, if so desired, in order to achieve particular properties.
An adhesive layer containing functional polar groups in the form of carboxylic acid groups, may be characterised by methods including for example infrared spectroscopy (IR, FTIR). A particular adhesive polymer having a particular monomeric composition, will give rise to a characteristic absorption spectra with peaks representing different molecular groups of the monomers included. In particular carboxylic groups will give rise to a characteristic peak in the FTIR spectrum that corresponds to stretching vibration of the acid group at between 1710-1780 cm-1. Materials that have gas barrier properties, in particular against oxygen, and that are usable for the packaging laminate according to the invention may be both organic and also inorganic materials. An example of organic materials is that of copolymers of ethylene and vinyl alcohol (EVOH) and various types of polyamides (PA). Examples of inorganic materials can be an aluminium foil or a polymer film which, on one side, has a coating of metal, e.g. vapour-deposited aluminium or a vapour-deposited coating of an oxide, e.g. aluminium oxide or silicon oxide (SiOx). An aluminium foil is preferably chosen which, in addition to having excellent barrier properties against gases, in particular oxygen, also allows the packaging laminate to be sealed by induction sealing, which is a rapid, simple and effective heat-sealing technique.

In yet another aspect of the invention, a packaging container is made available for oxygen-sensitive liquid food, for example milk, juice, wine and cooking oil. The packaging container is characterized in that it is produced from the packaging laminate according to the invention by folding and heat-sealing.

For example, the packaging container can be produced from a web of the packaging laminate according to the invention, by a process in which the web is firstly shaped into a tube by means of both lengthwise edges of the web being joined to each other in an overlap seam by melting together the mutually facing plastic layers, after which the tube is filled with the food product in question, e.g. milk, juice, wine or cooking oil, and is divided into contiguous pillow-shaped packaging units by repeated pressing-together and heat-sealing of the tube transversely with respect to the longitudinal direction of the tube, below the product level of the tube, which packaging units are separated from each other and are finally given the desired geometric shape, usually a shape like a brick, by means of at least one further forming and heat-sealing operation.

In an alternative embodiment, the packaging container can be produced from a tubular blank of the packaging laminate according to the invention that is folded flat, by first of all building the blank up to form an open tubular container capsule, of which one end is closed off by means of folding and heat-sealing of prepared integral end panels, which container capsule is filled with the food product in question, e.g. milk, juice, wine or cooking oil, through its open end, which is thereafter closed off by means of at least one further folding and heat-sealing of corresponding prepared integral end panels.

### Brief description of the figures

The invention will be described in more detail with reference to the attached drawings, in which:
Figure 1 is a schematic cross-sectional view of a packaging laminate according to the invention;
Figure 2 schematically illustrates the production of the packaging laminate from Figure 1 by the method according to the invention;
Figure 2A is an enlarged view of the circled area A in Figure 2;
Figure 3 schematically depicts a method for forming, filling and sealing packaging containers from a web on a reel of packaging material;
Figure 4 is a schematic perspective view of a packaging container of the type Tetra Brik Aseptic, made from the packaging laminate according to the invention;
Figure 5 is a schematic perspective view of a packaging container of the type Tetra Fino Aseptic, made from the packaging laminate according to the invention;
Figure 6 is a schematic perspective view of a packaging container of the gable-top type, a so-called Tetra Rex package, made from the packaging laminate according to the invention;
Figure 7 schematically depicts the neck-in effect during extrusion coating of a polymer on a running web; and
Figure 8 shows the results of neck-in measurements during extrusion coating in accordance with extrusion examples 1-3.

### Detailed description of the figures

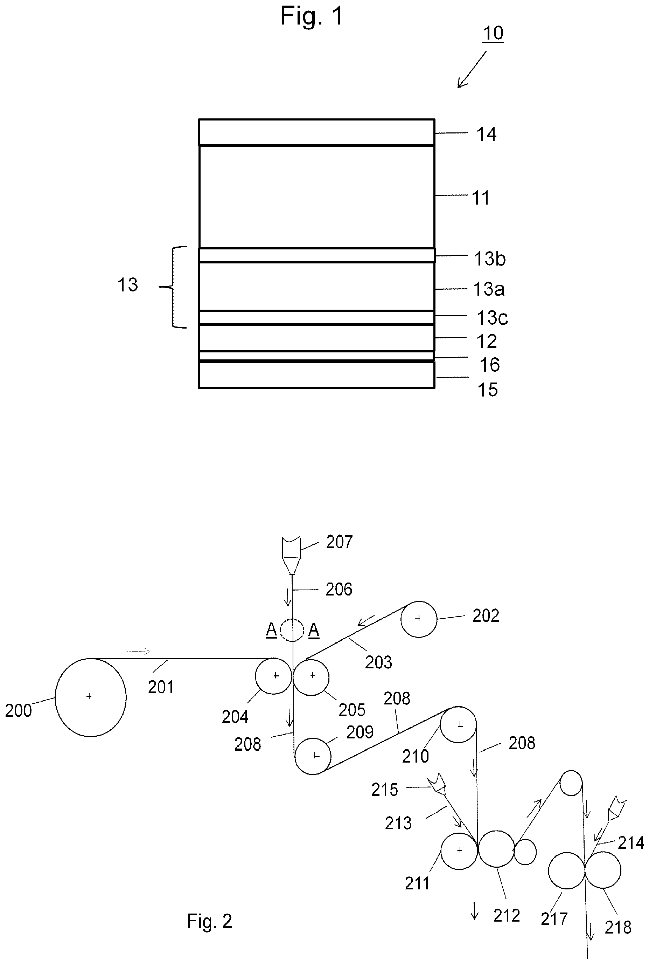

Figure 1 thus shows schematically a cross section through a general packaging laminate according to an embodiment of the invention. The packaging laminate, designated by the general reference sign 10, has a layer 11 of paper or paperboard, and a layer 12 which serves as gas barrier and is bonded to the paper or paperboard layer 11 by a lamination layer 13. In the embodiment shown, the packaging laminate 10 also has an outer liquid-tight coating 14, 15 on both sides of the paper or paperboard layer 11.

The lamination layer 13 has a central layer 13a, of which one surface has a layer 13b of an adhesive with the ability to bind to the paper or paperboard layer 11, and of which the other surface has a layer 13c of an adhesive with the ability to bind to the layer 12 serving as gas barrier. As is shown in Figure 1, the adhesive layer 13b on one side of the central layer 13a is in contact with the paper or paperboard layer 11, while the adhesive layer 13c on the other side of the central layer 13a is in contact with the layer 12 serving as gas barrier.

In one illustrative embodiment according to the invention, the central layer 13a can be a polymer layer of low-density polyethylene (LDPE) that can be produced by a polymerization reaction in either an autoclave reactor or a tube reactor. As has already been mentioned, a polymer layer of low-density polyethylene (LDPE) is preferably a low-density polyethylene (LDPE) that is produced in the latter type of reactor, i.e. a tube reactor, since a low-density polyethylene (LDPE) of this kind permits extrusion at a lower extrusion temperature and at a higher web speed (draw-down) than a low-density polyethylene (LDPE) that is produced in an autoclave reactor.

In another illustrative embodiment, the central layer 13a can be a polymer layer made of a linear polymer, which helps give the finished packaging laminate 10 improved mechanical properties when these are desired. Examples of linear polymers that can be used are high-density polyethylene (HDPE), or linear low-density polyethylene (LLDPE), very low-density polyethylenes (VLDPE), ultra low-density polyethylenes (ULDPE) produced with conventional catalysts or so-called single-site catalysts.

As has already been mentioned, a well-functioning adhesive polymer for the adhesive layers 13b and 13c has active binding sites (free carboxylic acid groups) to permit effective and permanent binding to the paper or paperboard layer 11 and to the layer 12 serving as gas barrier. A further requirement of a well-functioning adhesive polymer in the packaging laminate 10 according to the invention is that it is able to be applied at a sufficiently low temperature in order to avoid loss of quality as a result of degradation reactions upon contact with the warmer polymer in the central layer 13a of the lamination layer 13. Practical examples of adhesives with active binding sites (acid groups) are ethylene-acrylic acid copolymer (EAA) and ethylene-methacrylic acid copolymer (EMAA).

The adhesive layers 13b and 13c of the lamination layer 13 can be made from adhesive polymers of mutually different chemical compositions and of mutually different layer thicknesses, but they are preferably made from one and the same adhesive polymer with one and the same layer thickness.

According to the invention, the material in the layer 12 serving as gas barrier can be of both organic and inorganic nature. Examples of organic materials are various types of polyamides (PA), and one example of inorganic material is an aluminium foil. Preferably, the layer 12 serving as gas barrier is an aluminium foil which, in addition to its excellent barrier properties against gases, in particular oxygen, also makes the packaging laminate 10 heat-sealable by means of induction sealing, which is a rapid and also effective sealing technique.

The outer liquid-tight coatings 14 and 15 of the packaging laminate 10 can be coatings of a polyolefin, such as polyethylene (PE) and polypropylene (PP) homo- or copolymers. Examples of a usable polyethylene (PE) are low-density polyethylene (LDPE), linear low-density polyethylene (LLDPE) produced with conventional catalysts or so-called single-site catalysts, and high-density polyethylene (HDPE). In the present case, an outer liquid-tight coating, which is intended to be directed towards a food product packed in a packaging container, can be bonded to the barrier layer by a layer of an adhesive polymer of the same type as, or different from, the adhesive layers included in the laminating material 13.

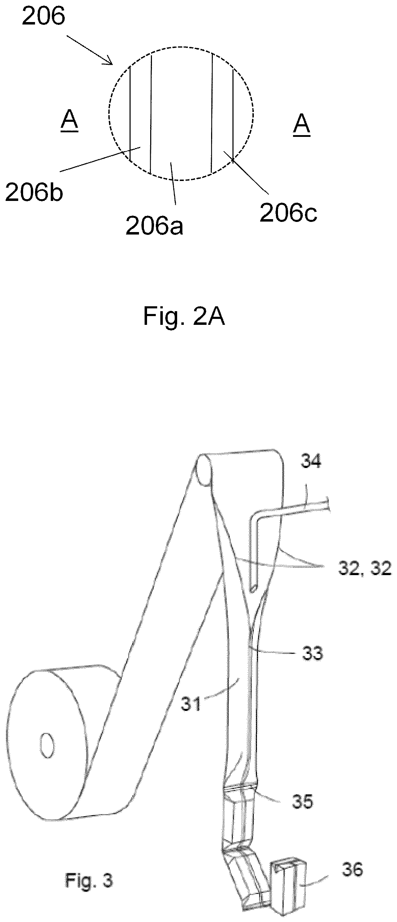

According to the invention, the packaging laminate 10 in Figure 1 can be produced in the manner shown schematically in Figure 2. A web 201 of paper or paperboard is unwound from a storage reel 200, and a corresponding web 203 of a material with barrier properties against gases, in particular oxygen, is unwound from a storage reel 202. The two webs 201 and 203 are brought together with each other and are guided together through a nip between two adjacent rotatable cylinders 204 and 205, while at the same time a laminating material 206 is applied between the webs in order to laminate them to each other and thereby form a durable laminated web 208.

In the example shown, the laminating material 206 is applied by co-extrusion with the aid of an extruder 207 arranged above the nip and will be described in more detail below.

The laminated web 208 is then conveyed via guide rollers 209 and 210 towards and through a nip between two further adjacent rotatable cylinders 211 and 212, while at the same time one surface of the web 208 is provided with an outer liquid-tight coating 213 of extrusion-coated polymer. In a subsequent nip between another two adjacent rotatable cylinders 217 and 218, the other surface of the web 208 is provided with an outer liquid-tight coating 214 of extruded polymer. These two extrusion-coating steps can be carried out in reverse order and also, wholly or partly, before the lamination step in the nip between the cylinders 204 and 205.

In the example shown, an outer liquid-tight coating 213 is applied to one surface of the web by extrusion with the aid of an extruder 215, and an outer liquid-tight coating 214 is applied to the other surface of the web 208 by extrusion with the aid of a corresponding extruder 216 arranged near the web 208.

Following further mechanical or other machining operations on the web thus coated, the latter is finally wound up for onward transport and further handling in which it is formed into dimensionally stable packaging containers for oxygen-sensitive liquid food, e.g. milk, juice, wine and cooking oil, as will be described hereinbelow.

According to the invention, the laminating material 206 with which the web 203 of the material with barrier properties against gases, in particular oxygen, is laminated to the paper or paperboard web 201 is a three-layer structure, as is shown on an enlarged scale in Figure 2A. This three-layer structure has a central layer 206a of a polymer which, on one surface, has a first outer layer 206b of an adhesive polymer with the ability to bind to paper or paperboard and, on its other surface, has a second outer layer 206c of an adhesive polymer with the ability to bind to said material with barrier properties against gases, in particular oxygen. According to the invention, the three-layer structure serving as laminating material is extruded by co-extrusion, in such a way that the outer adhesive layer 206b is brought into direct contact with the paper or paperboard web 201, while at the same time the outer adhesive layer 206c is brought into direct contact with the web 203 of the material with barrier properties against gases, in particular oxygen.

According to the invention, and as has already been mentioned, the polymer for the central layer 206a of the laminating material 206 can be chosen more or less freely and is thus not limited to any particular type of polymer. An example of a usable polymer for the central layer 206a of the laminating material 206 is a low-density polyethylene (LDPE) of the type which is produced by a polymerization reaction in an autoclave reactor, or a low-density polyethylene (LDPE) of the type which is produced by a polymerization reaction in a tube reactor. By virtue of the method according to the invention, low-density polyethylene (LDPE) produced in an autoclave reactor can, despite its poorer draw-down properties, also be extruded at a relatively high speed and even at lower temperatures, while at the same time the layers can be extruded more thinly, the total amount of laminating material is reduced, better adhesion can be achieved, and energy is saved.

Low-density polyethylene (LDPE) produced in a tube reactor permits co-extrusion coating at a relatively high production speed, for example ca. 400 m/min and over, by virtue of its good draw-down properties, compared with an LDPE produced in an autoclave reactor. It also has the added advantage that it can be co-extruded and coated at a lower extrusion temperature, for example 280 to 310°C, for example 290 to 300°C, than LDPE produced in an autoclave reactor and therefore requires less energy than the latter. In turn, extrusion of low-density polyethylene (LDPE) at a lower temperature such as this reduces the risk of the quality being impaired by degradation reactions, as has already been mentioned.

Other examples of usable polymers for the central layer 206a of the laminating material 206 are linear polymers, which have the advantage of helping to improve the mechanical properties of the finished packaging laminate. Examples of linear polymers that can be used in the method according to the invention are high-density polyethylene (HDPE), medium-density polyethylene (MDPE), linear low-density polyethylene (LLDPE), very low-density polyethylenes (VLDPE), ultra low-density polyethylenes (ULDPE) produced with conventional catalysts or so-called single-site catalysts, or constrained-geometry catalysts, including so-called metallocene catalysts.

The requirement to be met by usable adhesive polymers for both outer layers 206b and 206c of the laminating material 206 is of course that they must permit effective and permanent binding to the respective web 201 and 203. A further requirement is that they must also be able to be extruded at a sufficiently low temperature in order to avoid the risk of inadvertently increasing the temperature of the polymer layer 20 of the laminating material 206 such that it exceeds the critical temperature at which uncontrolled degradation reactions may be initiated that impair quality. Examples of adhesives that meet both of these requirements are ones which, in their natural state, have active acid groups on their surface, for example ethylene-acrylic acid copolymer (EAA) and ethylene-methacrylic acid copolymer (EMAA). Such an adhesive is commercially available under the trade name Primacor from Dow Chemical Company, and another such adhesive can be obtained from DuPont under the trade name Nucrel. A further example is obtainable from ExxonMobil Chemicals under the trade name Escor. Although adhesives that are different from each other can be used in the outer layers 206b and 206c of the laminating material 206, it is advantageous, for reasons of processing technology, to use adhesive of the same composition and of the same quantity in each of the outer layers 206b and 206c.

Materials that have gas barrier properties and that are usable in the method according to the invention may be of both organic and also inorganic nature. Examples of organic materials are copolymers of ethylene and vinyl alcohol (EVOH) and various types of polyamides (PA). Examples of inorganic materials can be an aluminium foil or a polymer film which, on one or both of its sides, has a coating of metal, e.g. vapour-deposited or vacuum-metallized aluminium or a vapour-deposited coating of an oxide, e.g. aluminium oxide, or silicon oxide (SiOx). An aluminium foil is preferably used which, in addition to having excellent barrier properties against gases, also allows the packaging laminate to be sealed by so-called induction sealing, which is a rapid, simple and effective heat-sealing technique.

Examples of usable polymers for the liquid-tight, heat-sealable outer layers 213 and 214 applied to the web 208 in the method according to the invention are polyolefins, such as low-density polyethylene (LDPE), linear low-density polyethylene (LLDPE), high-density polyethylene (HDPE) and polypropylene (PP) homo- or copolymers.

From a web of the packaging laminate 10 in Figure 1 for example, it is possible, as has already been mentioned, to produce dimensionally stable packaging containers of a disposable type for oxygen-sensitive liquid foods, such as milk, juice, wine and cooking oil, by folding and heat-sealing in a manner known per se. Such packaging containers are nowadays produced with the aid of modern packaging machines of the type in which finished packages are shaped, filled and sealed.

One way in which packaging containers made of the packaging laminate 10 in Figure 1 can be shaped, filled and sealed is illustrated in Figure 3. The so-called single-use packages are produced from the web by means of the latter first of all being shaped into a tube 31, in which the longitudinal edges 32, 32' of the web are joined to each other in an overlap seam 33 by melting together the mutually facing surfaces of the plastic layers 14 and 15. The tube is filled 34 with the food product in question and is divided into contiguous pillow-shaped packaging units 36 by repeated pressing-together and heat-sealing of the tube transversely with respect to the longitudinal direction 35 of the tube, below the product level of the tube, and the packaging units are separated from each other and finally given the desired geometric shape, usually a parallelepipedal shape like a brick, by means of at least one further folding and heat-sealing step.

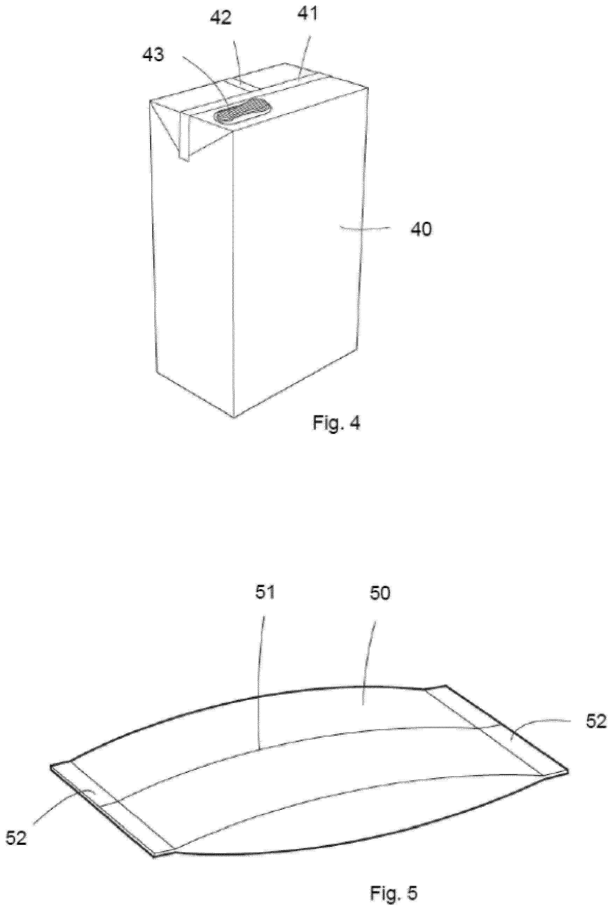

A well-known example of a single-use package of this type is the commercial package sold under the name Tetra Brik *aseptic,* which is shown in Figure 4. In addition to the characteristic brick-like outer shape, a unique feature of this commercial type of packaging is that it is produced more or less completely by folding and heat-sealing 41, 42 of the web-shaped packaging laminate, without the use of extra packaging parts such as separate tops and/or bottoms. Such packaging containers 40 can also be provided with a suitable opening arrangement 43, for example a screw cap which, when opened, penetrates and removes the packaging material and permits emptying of the packaged product. For this purpose, the laminated packaging laminate can have perforations in the paperboard layer that has been laminated in between the polymers and barrier layers of the laminate. Alternatively, a hole is punched in the laminated packaging material immediately before the filling process, after which the hole is provided with a tape or pull-tab, on both sides of the packaging material. After the packaging container has been filled and sealed, an opening arrangement in the form of a hinge or screw cap can be applied on top of the covered hole. Alternatively, an opening arrangement is applied which is cast onto a punched hole directly during the filling process. It is not necessary to provide the packaging container with an opening device, it can also be torn open by means of a tear-perforation, or by cutting.

Alternatively, packaging containers can be produced as above but have, as their final shape, the pillow shape that is obtained directly after the packaging units have been separated from each other and that is not therefore further shaped by folding. Such a package is generally produced using a thinner paperboard material and therefore entails greater demands on adhesion and integrity of the packaging material with regard to the lamination layers and also to the mechanical strength characteristics, in particular the elastic characteristics, of the polymer layers. An example of one such package is shown in Figure 5.

Packaging containers for oxygen-sensitive liquid food, for example juice, can also be produced from sheet-like blanks or prefabricated blanks of the packaging laminate 10 in Figure 1. From a tubular blank of the packaging laminate 10 that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is shown in Figure 6 and is a so-called gable-top package 60. There are also packages of this type which have a moulded top and/or screw cap made of plastic.

### Example 1

Packaging laminate 10 was produced with the composition indicated in the following table:

| Laminate layer | Reference sign in figures | Coating quantity, g/m² (reference example 1) | Coating quantity, g/m² (Example 1 according to the invention) |
|---|---|---|---|
| Low-density polyethylene (LDPE) | 14 | 12 | 12 |
| Paperboard | 11 | | |

| Laminate layer | Reference sign in figures | Coating quantity, g/m² (reference example 1) | Coating quantity, g/m² (Exam ple 1 according to the invention) |
|---|---|---|---|
| Ethylene-acrylic acid copolymer (EAA) | 13b | --- | 3 (Primacor 3540 Dow; with about 8 weight-% acrylic acid content) |
| Low-density polyethylene (LDPE) | 13a | 20 (Novex 19N730) (Autoclave-LDPE) | 10 (Novex 19N730) |
| Ethylene-acrylic acid copolymer (EAA) | 13c | --- | 3 (Primacor 3540 Dow) |
| Aluminium foil | 12 | 6.3 µm | 6.3 µm |
| Ethylene-acrylic acid copolymer (EAA) | (not shown) | 6 | 6 |
| Blend of LDPE and m-LLDPE (weight ratio 30:70) | 15 | 19 | 19 |

Packaging laminate 10 according to the invention in Example 1 was produced by co-extrusion of the material layers 13a-13c as a three-layer structure, with the material layers included in the sequence 13b/13a/13c. This co-extrusion could generally be carried out at an extrusion speed of 200 m/min and at an extrusion temperature of below 310 °C and without the use of ozone or other extra chemicals to achieve and maintain a permanent binding of the aluminium foil 12, serving as gas barrier, to the paper or paperboard layer 11 of the packaging laminate. The paperboard material used throughout was CLC/C material with a bending force of 260 mN. The three layers were able to be co-extruded at the temperatures 290 -310 - 290 °C and at a web speed of 650 m/min, with excellent (non-measurable, above the detection limit) adhesion to the paperboard layer or barrier layer.

The known packaging laminate constituting reference example 1 was produced in a similar manner by extrusion of only the material layer 13a, but in this case an extrusion temperature as high as 325 °C was needed, together with addition of ozone, to achieve an acceptable binding between the aluminium foil 12 and the paper or paperboard layer 11. A packaging laminate produced by the method according to the invention thus has considerable environmental and health-related advantages over a corresponding packaging laminate produced in the known way, i.e. without use of adhesive in direct contact with the paper or paperboard layer and with the layer serving as gas barrier, in this case the aluminium foil. The adhesion obtained, in the example according to the invention, between the laminating material and the aluminium foil was improved to such an extent that the layers could no longer be separated along the interfaces between these two materials, i.e. the adherence was higher than the detection limit in the peel test, which is ca 200 N/m. By way of comparison, satisfactory adhesion was also obtained in the reference example, by means of a higher extrusion temperature and also surface treatment with ozone, but the adhesion was not so great that the layers could not be separated (mean value 105 N/m). After shaping into packaging containers, satisfactory packaging integrity was obtained, i.e. durability and tightness both to liquid and oxygen, with the packaging laminates from both Example 1 and the reference example.

In a peel test, strips of packaging laminate measuring 15 mm in width are cut, and the two layers between which the adherence is to be measured are separated/delaminated. The two flaps of the delaminated strips are clamped in a tension testing machine, where the strips are further delaminated under controlled conditions at a delamination angle of 90°. The force during the delamination is measured with a load cell, and the peel test value is indicated by the unit N/m. The method is a variation of ASTM D903 - 98(2010) "Standard Test Method for Peel or Stripping Strength of Adhesive Bonds", with the difference that the specimen width is 15 mm instead of 25 mm and the delamination angle is 90° instead of 180°.

Moreover, with the purpose of testing the ability of the packaging laminate to withstand impact or percussion, like when a packaging container falls down on the floor from a certain height, observations made by an internal test method surprisingly showed a significant improvement, up to more than 30 %, of the durability of the packaging laminate of the invention compared to the packaging laminate of the reference example 1.

### Example 2

Example 1 and reference example 1 were repeated at a web speed of 200 m/min and with two different spacings between the outlet of the extrusion die and the point of contact of the melt curtain with the surface of the web, namely air gaps of 195 mm and 310 mm. Moreover, the examples were repeated with the sole difference that the laminating material in reference example 1 was replaced by a test polymer of LDPE2 produced by polymerization in a tube reactor, which had the expected poor extrusion properties, in the form of a high neck-in, upon extrusion as a single layer of laminating material.
In Example 2, a laminating material was co-extruded with a central layer of the same LDPE2 and with outer adhesive layers of the same polymer and layer thickness as in Example 1. Equivalent packaging properties to those in Example 1 (barrier properties and adhesion) were obtained, and also a considerably improved extrusion process (reduced neck-in) compared to a reference example 2 using a single layer of the same polymer LDPE2 as laminating material. The neck-in values indicated in Table 3 are the combined width in mm of that part of the extrusion-coated web that has not been coated with extruded polymer, i.e. the sum of the widths of the uncoated edge zones of the web.

Specifically, the three layers with LDPE2 as central layer were able to be co-extruded at the temperatures 290 - 290 - 290 °C and at a higher web speed of ca 500 m/min, with excellent adhesion to the paperboard and barrier layers, such that the layers could not be separated and, thus, the adhesion was too high to be measured.

### Example 3

Reference example 2 was repeated with the sole difference that the laminating material was replaced by a polymer LDPE3 (Dow 750 E) which was produced by polymerization in a tube reactor and which, according to all available data and recommendations, is not suitable for extrusion coating and is instead intended for injection moulding and has an MFI of as high as 20 g/10 min at 2.16 kg, 190°C. As was expected, conventional extrusion lamination could not be carried out with this polymer on account of too much neck-in. In Example 3, a laminating material was instead co-extruded with a central layer of the same LDPE3 and with outer adhesive layers of the same polymer and layer thickness as in Example 2.
Equivalent adhesion properties were obtained and a considerably improved extrusion process (reduced neck-in), including better than expected and equivalent to reference lamination with a single layer of the autoclave-polymerized LDPE in Example 1. Moreover, in all of Examples 1-3, the thickness of the thin laminating layer was able to be reduced, according to the invention, from 20 to 16 g/m² of total laminating material, which entails cost savings and better economy of resources in the form of raw materials.

### Examples 2 and 3 and reference examples 2 and 3 (Table 2)

| Laminate layer | Fig. | g/m² Ref. Ex 2 | g/m² Ex. 2 | g/m² Ref. Ex 3 | g/m² Ex. 3 |
|---|---|---|---|---|---|
| (LDPE) | 14 | 12 | 12 | 12 | 12 |
| Paper | 11 | 260 mN | 260 mN | 260 mN | 260 mN |
| Ethylene-acrylic acid copolymer (EAA) | 13b | --- | 3 | --- | 3 |
| Laminating material / central layer | 13a | 20 LDPE2 | 10 LDPE2 | 20 LDPE3 | 10 LDPE3 |
| Ethylene-acrylic acid copolymer (EAA) | 13c | --- | 3 | --- | 3 |
| Aluminium foil | 12 | 6.3 µm | 6.3 µm | 6.3 µm | 6.3 µm |
| Ethylene-acrylic acid copolymer (EAA) | 16 | 6 | 6 | 6 | 6 |
| Blend of LDPE and m-LLDPE | 15 | 19 | 19 | 19 | 19 |

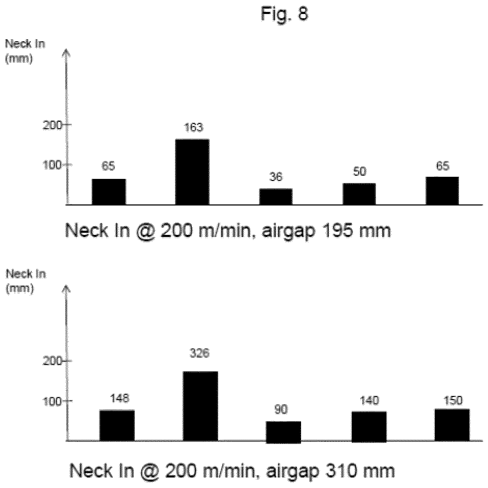

The results of Examples 1-3, as regards the reduced neck-in effect at extrusion speed 200 m/min, are shown in Table 3 and in graph form in Figure 8.

| Laminate layer | LDPE1 Ref. Ex1 | LDPE1 Ex. 1 | LDPE2 Ref. Ex2 | LDPE2 Ex. 2 | LDPE3 Ref.Ex3 | LDPE3 Ex. 3 |
|---|---|---|---|---|---|---|
| Total neck-in (mm) (both edges of web) Airgap 195 mm | 65 | 36 | 163 | 50 | --- | 65 |
| Total neck-in (mm) Airgap 310 mm | 148 | 90 | 326 | 140 | --- | 150 |

### Example 4

Example 1 was repeated with the sole difference that Primacor 3460 (MFI 20 g/10min) was used as adhesive polymer in both outer layers 13b and 13c of the laminating material. Conventional autoclave-LDPE Novex 19N 730 was used as central layer. The three-layers were co-extruded at the temperature setting 290-290-290 °C and were able to be coated at a web speed of 500 m/min.

### Examples 5 and 6

Like Example 3, but in a separate evaluation, studied in comparison with m-LLDPE and HDPE as laminating material. While extrusion of these polymers as the sole laminating material was not possible on account of excessively high neck-in values, even at low extrusion speeds, co-extrusion with outer adhesive layers permitted a considerably improved extrusion process, such that paper web and aluminium foil were able to be laminated to each other with satisfactory adhesion.

### Industrial applicability

In the method according to the invention, a packaging laminate for a packaging container for oxygen-sensitive liquid food, such as milk, juice, wine and cooking oil, is produced without the use of an unnecessarily energy-intensive production operation (extrusion) and without the use of environmentally hazardous chemicals to give the packaging laminate acceptable integrity properties.

## Claims

1. Method for producing a packaging laminate (10) for a packaging container for oxygen-sensitive liquid food comprising a paper or paperboard layer (11) and a layer (12) serving as gas barrier, which layers (11 and 12) are bonded to each other by a layer (13) of a laminating material, in which method a web (203) of a material with barrier properties against gases, in particular oxygen, is brought together with a web (201) of paper or paperboard, and the webs (203 and 201) brought together are guided through a nip between two adjacent rotatable cylinders (204 and 205), while at the same time a laminating material (206) is applied between the webs (201 and 203) in order to permanently bind these to each other, wherein the laminating material (206) comprises a central polymer layer comprising a polyolefin (206a) which, on one surface, has a first outer layer (206b) of a first adhesive polymer with the ability to bind to paper or paperboard and, on its other surface, has a second outer layer (206c) of a second adhesive polymer with the ability to bind to the material serving as gas barrier, and wherein the laminating material (206) is applied with its first outer adhesive layer (206b) in contact with the paper or paperboard web (201), and with its second outer adhesive layer (206c) in contact with the web (203) of the material with gas barrier properties, and is applied by coextrusion of the central polymer layer (206a) and the two said outer layers (206b and 206c) of adhesive polymer, **characterized in that** the adhesive polymers in the two outer layers (206b and 206c) have functional polar groups via which the adhesives can bind to each web (201 and 203) on both sides of the polymer layer (206a).

2. Method according to Claim 1, **characterized in that** the central polymer layer (206a) in the laminating material (206) comprises a polyethylene.

3. Method according to any of Claims 1-2, **characterized in that** the central polymer layer (206a) in the laminating material (206) comprises a polyethylene chosen from a group consisting of low-density polyethylene (LDPE), linear low-density polyethylene (LLDPE), very low-density polyethylenes (VLDPE), ultra low-density polyethylenes (ULDPE), linear low-density polyethylene which has been produced with a so-called single-site catalyst, metallocene catalyst or so-called constrained-geometry catalyst (m-LLDPE), medium-density polyethylene (MDPE) and high-density polyethylene (HDPE) .

4. Method according to claim 3, **characterized in that** the central polymer layer (206a) in the laminating material (206) comprises a low-density polyethylene (LDPE) which is produced either by a polymerization reaction in an autoclave reactor or by a polymerization reaction in a tube reactor.

5. Method according to any of the preceding claims, **characterized in that** the adhesive polymers in the two outer layers (206b and 206c) in the laminating material (206) are identical to each other.

6. Method according to any one of the preceding claims, **characterized in that** the adhesives in the two outer layers (206b and 206c) have been chosen from the materials ethylene-acrylic acid copolymer (EAA) and ethylene-methacrylic acid copolymer (EMAA).

7. Method according to any of the preceding claims, **characterized in that** the material layer serving as gas barrier is aluminium.

8. Packaging laminate (10) for a packaging container for oxygen-sensitive liquid food, which packaging laminate comprises a layer (11) of paper or paperboard, and a layer (12) serving as gas barrier, which layers (11 and 12) are bonded to each other by a laminating material (13), wherein the laminating material (13) comprises a central polymer layer comprising a polyolefin (13a) which, on one surface, has a first layer (13b) of a first adhesive polymer with the ability to bind to the paper or paperboard layer (11) and, on its other surface, has a second layer (13c) of a second adhesive polymer with the ability to bind to the layer (12) serving as gas barrier, and the adhesive layer (13b) on one surface of the polymer layer (13a) is in contact with the paper or paperboard layer (11), and the adhesive layer (13c) on the other surface of the polymer layer (13a) is in contact with the layer (12) serving as gas barrier, and wherein the central layer (13a) of the laminating material is coextruded together with the first and second adhesive layers (13b and 13 c) when applied to bind the paper or paperboard layer (11) to the layer (12) serving as gas barrier, **characterized in that** the adhesives in the two outer layers (13b and 13c) have functional polar groups via which the layers (13b and 13c) can bind to the paper or paperboard layer (11) and the layer (12) serving as gas barrier.

9. Packaging laminate according to Claim 8, **characterized in that** the central polymer layer (13a) comprises a polyethylene.

10. Packaging laminate according to Claim 8, **characterized in that** the central polymer layer (13a) comprises a polyethylene chosen from a group consisting of low-density polyethylene (LDPE), linear low-density polyethylene (LLDPE), very low-density polyethylenes (VLDPE), ultra low-density polyethylenes (ULDPE), linear low-density polyethylene which has been produced with a so-called single-site catalyst, metallocene catalyst or so-called constrained-geometry catalyst (m-LLDPE), medium-density polyethylene (MDPE) and high-density polyethylene (HDPE).

11. Packaging laminate according to Claim 8, **characterized in that** said central polymer layer (13a) comprises a low-density polyethylene (LDPE) which is produced either by a polymerization reaction in an autoclave reactor or by a polymerization reaction in a tube reactor.

12. Packaging laminate according to any of Claims 8-11, **characterized in that** the adhesives in the two outer layers (13b and 13c) of the laminating material are identical to each other.

13. Packaging laminate according to any one of Claims 8 to 12, **characterized in that** the adhesives in the two outer layers (13b and 13c) have been chosen from ethylene-acrylic acid copolymer (EAA) and ethylene-methacrylic acid copolymer (EMAA).

14. Packaging laminate according to any of Claims 8-13, **characterized in that** the layer (12) serving as gas barrier is an aluminium foil.

15. Packaging container for oxygen-sensitive liquid food, e.g. milk, juice, wine, cooking oil, etc., **characterized in that** it is produced from the packaging laminate (10) according to any one of Claims 8-14.

## Patentansprüche

1. Verfahren zum Herstellen eines Verpackungsschichtstoffs (10) für einen Verpackungsbehälter für sauerstoffsensitive flüssige Lebensmittel, der eine Papier- oder Kartonschicht (11) und eine als Gassperre dienende Schicht (12) umfasst, wobei die Schichten (11 und 12) durch eine Schicht (13) eines Laminiermaterials miteinander verbunden werden, wobei im Verfahren eine Bahn (203) eines Materials mit Sperreigenschaften gegen Gase, insbesondere Sauerstoff, mit einer Bahn (201) von Papier oder Karton zusammengebracht wird und die zusammengebrachten Bahnen (203 und 201) durch einen Pressspalt zwischen zwei benachbarten drehbaren Zylindern (204 und 205) hindurchgeführt werden, während gleichzeitig ein Laminiermaterial (206) zwischen die Bahnen (201 und 203) eingebracht wird, um diese miteinander dauerhaft zu verbinden, wobei das Laminiermaterial (206) eine mittige Polymerschicht umfassend ein Polyolefin (206a) umfasst, die auf der einen Oberfläche eine erste Außenschicht (206b) eines ersten Klebepolymers mit Haftfähigkeit auf Papier oder Karton aufweist und auf ihrer anderen Oberfläche eine zweite Außenschicht (206c) eines zweiten Klebepolymers mit Haftfähigkeit auf dem als Gassperre dienenden Material aufweist, und wobei das Laminiermaterial (206) so aufgebracht wird, dass seine erste klebende Außenschicht (206b) in Kontakt mit der Papier- oder Kartonbahn (201) ist und seine zweite klebende Außenschicht (206c) in Kontakt mit der Bahn (203) des Gassperreigenschaften aufweisenden Materials ist, und durch Coextrusion der mittigen Polymerschicht (206a) und der beiden Klebepolymer-Außenschichten (206b und 206c) aufgebracht wird, **dadurch gekennzeichnet, dass** die Klebepolymere in den beiden Außenschichten (206b und 206c) polare funktionelle Gruppen aufweisen, über die die Klebstoffe sich mit der jeweiligen Bahn (201 und 203) auf beiden Seiten der Polymerschicht (206a) verbinden können.

2. Verfahren nach Anspruch 1, **dadurch gekennzeichnet, dass** die mittige Polymerschicht (206a) im Laminiermaterial (206) ein Polyethylen umfasst.

3. Verfahren nach einem der Ansprüche 1 bis 2, **dadurch gekennzeichnet, dass** die mittige Polymerschicht (206a) im Laminiermaterial (206) ein Polyethlyen umfasst, das gewählt ist aus einer Gruppe bestehend aus Polyethylen niedriger Dichte (LDPE), linearem Polyethylen niedriger Dichte (LLDPE), Polyethylenen sehr niedriger Dichte (VLDPE), Polyethylenen ultraniedriger Dichte (ULDPE), linearem Polyethylen niedriger Dichte hergestellt mit einem so genannten Einzentrenkatalysator, Metallocen-Katalysator oder so genannten Constrained-Geometry-Katalysator (m-LLDPE), Polyethylen mittlerer Dichte (MDPE) und Polyethylen hoher Dichte (HDPE).

4. Verfahren nach Anspruch 3, **dadurch gekennzeichnet, dass** die mittige Polymerschicht (206a) im Laminiermaterial (206) ein Polyethylen niedriger Dichte (LDPE) umfasst, das entweder durch eine Polymerisierungsreaktion in einem Autoklavenreaktor oder durch eine Polymerisierungsreaktion in einem Röhrenreaktor hergestellt wird.

5. Verfahren nach einem der vorhergehenden Ansprüche, **dadurch gekennzeichnet, dass** die Klebepolymere in den beiden Außenschichten (206b und 206c) im Laminiermaterial (206) miteinander identisch sind.

6. Verfahren nach einem der vorhergehenden Ansprüche, **dadurch gekennzeichnet, dass** die Klebstoffe in den beiden Außenschichten (206b und 206c) aus den Materialien Ethylen-Acrylsäure-Copolymer (EAA) und Ethylen-Methacrylsäure-Copolymer (EMAA) gewählt sind.

7. Verfahren nach einem der vorhergehenden Ansprüche, **dadurch gekennzeichnet, dass** die als Gassperre dienende Materialschicht Aluminium ist.

8. Verpackungsschichtstoff (10) für einen Verpackungsbehälter für sauerstoffsensitive flüssige Lebensmittel, wobei der Verpackungsschichtstoff eine Schicht (11) aus Papier oder Karton und eine als Gassperre dienende Schicht (12) umfasst, wobei die Schichten (11 und 12) durch ein Laminiermaterial (13) miteinander verbunden sind, wobei das Laminiermaterial (13) eine mittige Polymerschicht umfassend ein Polyolefin (13a) umfasst, die auf der einen Oberfläche eine erste Schicht (13b) eines ersten Klebepolymers mit Haftfähigkeit auf der Papier- oder Kartonschicht (11) aufweist und auf ihrer anderen Oberfläche eine zweite Schicht (13c) eines zweiten Klebepolymers mit Haftfähigkeit auf der als Gassperre dienenden Schicht (12) aufweist, und die Klebeschicht (13b) auf der einen Oberfläche der Polymerschicht (13a) mit der Papier- oder Kartonschicht (11) in Kontakt ist und die Klebeschicht (13c) auf der anderen Oberfläche der Polymerschicht (13a) mit der als Gassperre dienenden Schicht (12) in Kontakt ist, und wobei die mittige Schicht (13a) des Laminiermaterials zusammen mit der ersten und der zweiten Klebeschicht (13b und 13c) beim Aufbringen coextrudiert wird, um die Papier- oder Kartonschicht (11) mit der als Gassperre dienenden Schicht (12) zu verbinden, **dadurch gekennzeichnet, dass** die Klebstoffe in den beiden Außenschichten (13b und 13c) polare funktionelle Gruppen aufweisen, über die die Schichten (13b und 13c) sich mit der Papier- oder Kartonschicht (11) und der als Gassperre dienenden Schicht (12) verbinden können.

9. Verpackungsschichtstoff nach Anspruch 8, **dadurch gekennzeichnet, dass** die mittige Polymerschicht (13a) ein Polyethylen umfasst.

10. Verpackungsschichtstoff nach Anspruch 8, **dadurch gekennzeichnet, dass** die mittige Polymerschicht (13a) ein Polyethlyen umfasst, das gewählt ist aus der Gruppe bestehend aus Polyethylen niedriger Dichte (LDPE), linearem Polyethylen niedriger Dichte (LLDPE), Polyethylenen sehr niedriger Dichte (VLDPE), Polyethylenen ultraniedriger Dichte (ULDPE), linearem Polyethylen niedriger Dichte hergestellt mit einem so genannten Einzentrenkatalysator, Metallocen-Katalysator oder so genannten Constrained-Geometry-Katalysator (m-LLDPE), Polyethylen mittlerer Dichte (MDPE) und Polyethylen hoher Dichte (HDPE).

11. Verpackungsschichtstoff nach Anspruch 8, **dadurch gekennzeichnet, dass** die mittige Polymerschicht (13a) ein Polyethylen niedriger Dichte (LDPE) umfasst, das entweder durch eine Polymerisierungsreaktion in einem Autoklavenreaktor oder durch eine Polymerisierungsreaktion in einem Röhrenreaktor hergestellt wird.

12. Verpackungsschichtstoff nach einem der Ansprüche 8 bis 11, **dadurch gekennzeichnet, dass** die Klebstoffe in den beiden Außenschichten (13b und 13c) des Laminiermaterials identisch sind.

13. Verpackungsschichtstoff nach einem der Ansprüche 8 bis 12, **dadurch gekennzeichnet, dass** die Klebstoffe in den beiden Außenschichten (13b und 13c) gewählt sind aus Ethylen-Acrylsäure-Copolymer (EAA) und Ethylen-Methacrylsäure-Copolymer (EMAA).

14. Verpackungsschichtstoff nach einem der Ansprüche 8 bis 13, **dadurch gekennzeichnet, dass** die als Gassperre dienende Schicht (12) eine Aluminiumfolie ist.

15. Verpackungsbehälter für sauerstoffsensitive flüssige Lebensmittel, z. B. Milch, Saft, Wein, Speiseöl usw., **dadurch gekennzeichnet, dass** er aus dem Verpackungsschichtstoff (10) nach einem der Ansprüche 8 bis 14 hergestellt ist.

## Revendications

1. Procédé de fabrication d'un stratifié d'emballage (10) pour un récipient d'emballage destiné à des aliments liquides sensibles à l'oxygène comprenant une couche de papier ou de carton (11) et une couche (12) servant de barrière aux gaz, lesdites couches (11 et 12) étant liées l'une à l'autre par une couche (13) d'un matériau de stratification, dans ledit procédé, une bande (203) d'un matériau ayant des propriétés de barrière aux gaz, en particulier l'oxygène, étant réunie avec une bande (201) de papier ou de carton, et les bandes (203 et 201) réunies étant guidées à travers une zone de contact entre deux cylindres rotatifs adjacents (204 et 205), tandis qu'en même temps, un matériau de stratification (206) est appliqué entre les bandes (201 et 203) afin de les lier de façon permanente l'une à l'autre, le matériau de stratification (206) comprenant une couche de polymère centrale comprenant une polyoléfine (206a) qui, sur une surface, comporte une première couche externe (206b) d'un premier polymère adhésif capable de se lier au papier ou au carton et, sur son autre surface, comporte une deuxième couche externe (206c) d'un deuxième polymère adhésif capable de se lier au matériau servant de barrière aux gaz, et le matériau de stratification (206) étant appliqué de telle sorte que sa première couche adhésive externe (206b) soit en contact avec la bande de papier ou de carton (201), et que sa deuxième couche adhésive externe (206c) soit en contact avec la bande (203) du matériau ayant des propriétés de barrière aux gaz, et étant appliqué par coextrusion de la couche de polymère centrale (206a) et desdites deux couches externes (206b et 206c) de polymère adhésif, **caractérisé en ce que** les polymères adhésifs présents dans les deux couches externes (206b et 206c) comportent des groupes polaires fonctionnels par l'intermédiaire desquels les adhésifs peuvent se lier à chaque bande (201 et 203) sur les deux côtés de la couche de polymère (206a).

2. Procédé selon la revendication 1, **caractérisé en ce que** la couche de polymère centrale (206a) présente dans le matériau de stratification (206) comprend un polyéthylène.

3. Procédé selon l'une quelconque des revendications 1 et 2, **caractérisé en ce que** la couche de polymère centrale (206a) présente dans le matériau de stratification (206) comprend un polyéthylène choisi dans un groupe constitué d'un polyéthylène de basse densité (LDPE), d'un polyéthylène de basse densité linéaire (LLDPE), de polyéthylènes de très basse densité (VLDPE), de polyéthylènes d'ultra-basse densité (ULDPE), d'un polyéthylène de basse densité linéaire qui a été produit avec un catalyseur dit monosite, un catalyseur métallocène ou un catalyseur dit à géométrie restreinte (m-LLDPE), d'un polyéthylène de moyenne densité (MDPE) et d'un polyéthylène de haute densité (HDPE).

4. Procédé selon la revendication 3, **caractérisé en ce que** la couche de polymère centrale (206a) présente dans le matériau de stratification (206) comprend un polyéthylène de basse densité (LDPE) qui est produit soit par une réaction de polymérisation dans un réacteur autoclave, soit par une réaction de polymérisation dans un réacteur tubulaire.

5. Procédé selon l'une quelconque des revendications précédentes, **caractérisé en ce que** les polymères adhésifs présents dans les deux couches externes (206b et 206c) dans le matériau de stratification (206) sont identiques l'un à l'autre.

6. Procédé selon l'une quelconque des revendications précédentes, **caractérisé en ce que** les adhésifs présents dans les deux couches externes (206b et 206c) ont été choisis parmi les matériaux copolymère d'éthylène-acide acrylique (EAA) et copolymère d'éthylène-acide méthacrylique (EMAA).

7. Procédé selon l'une quelconque des revendications précédentes, **caractérisé en ce que** la couche de matériau servant de barrière aux gaz est l'aluminium.

8. Stratifié d'emballage (10) pour un récipient d'emballage destiné à des aliments liquides sensibles à l'oxygène, ledit stratifié d'emballage comprenant une couche (11) de papier ou de carton, et une couche (12) servant de barrière aux gaz, lesdites couches (11 et 12) étant liées l'une à l'autre par un matériau de stratification (13), dans lequel le matériau de stratification (13) comprend une couche de polymère centrale comprenant une polyoléfine (13a) qui, sur une surface, comporte une première couche (13b) d'un premier polymère adhésif capable de se lier à la couche de papier ou de carton (11) et, sur son autre surface, comporte une deuxième couche (13c) d'un deuxième polymère adhésif capable de se lier à la couche (12) servant de barrière aux gaz, et la couche adhésive (13b) sur une surface de la couche de polymère (13a) est en contact avec la couche de papier ou de carton (11), et la couche adhésive (13c) sur l'autre surface de la couche de polymère (13a) est en contact avec la couche (12) servant de barrière aux gaz, et dans lequel la couche centrale (13a) du matériau de stratification est coextrudée conjointement avec les première et deuxième couches adhésives (13b et 13c) lorsqu'elles sont appliquées pour lier la couche de papier ou de carton (11) à la couche (12) servant de barrière aux gaz, **caractérisé en ce que** les adhésifs présents dans les deux couches externes (13b et 13c) comportent des groupes polaires fonctionnels par l'intermédiaire desquels les couches (13b et 13c) peuvent se lier à la couche de papier ou de carton (11) et à la couche (12) servant de barrière aux gaz.

9. Stratifié d'emballage selon la revendication 8, **caractérisé en ce que** la couche de polymère centrale (13a) comprend un polyéthylène.

10. Stratifié d'emballage selon la revendication 8, **caractérisé en ce que** la couche de polymère centrale (13a) comprend un polyéthylène choisi dans un groupe constitué d'un polyéthylène de basse densité (LDPE), d'un polyéthylène de basse densité linéaire (LLDPE), de polyéthylènes de très basse densité (VLDPE), de polyéthylènes d'ultra-basse densité (ULDPE), d'un polyéthylène de basse densité linéaire qui a été produit avec un catalyseur dit monosite, un catalyseur métallocène ou un catalyseur dit à géométrie restreinte (m-LLDPE), d'un polyéthylène de moyenne densité (MDPE) et d'un polyéthylène de haute densité (HDPE).

11. Stratifié d'emballage selon la revendication 8, **caractérisé en ce que** ladite couche de polymère centrale (13a) comprend un polyéthylène de basse densité (LDPE) qui est produit soit par une réaction de polymérisation dans un réacteur autoclave, soit par une réaction de polymérisation dans un réacteur tubulaire.

12. Stratifié d'emballage selon l'une quelconque des revendications 8 à 11, **caractérisé en ce que** les adhésifs présents dans les deux couches externes (13b et 13c) du matériau de stratification sont identiques l'un à l'autre.

13. Stratifié d'emballage selon l'une quelconque des revendications 8 à 12, **caractérisé en ce que** les adhésifs présents dans les deux couches externes (13b et 13c) ont été choisis parmi un copolymère d'éthylène-acide acrylique (EAA) et un copolymère d'éthylène-acide méthacrylique (EMAA).

14. Stratifié d'emballage selon l'une quelconque des revendications 8 à 13, **caractérisé en ce que** la couche (12) servant de barrière aux gaz est une feuille d'aluminium.

15. Récipient d'emballage destiné à des aliments liquides sensibles à l'oxygène, par exemple le lait, le jus de fruit, le vin, l'huile de cuisson, etc., **caractérisé en ce qu'**il est produit à partir du stratifié d'emballage (10) selon l'une quelconque des revendications 8 à 14.
